# EUROPÄISCHE PATENTSCHRIFT

(11) **EP 1 036 944 B1**
(45) Veröffentlichungstag und Bekanntmachung des Hinweises auf die Patenterteilung: **05.11.2003**
(21) Anmeldenummer: 00104693.7
(22) Anmeldetag: 03.03.2000
(51) Int. Cl.: F16B 5/02

(54) **Befestigungseinrichtung sowie Kupplungsgehäuse mit einer derartigen Befestigungseinrichtung**
Fastening device and coupler housing equipped with such a device
Dispositif de fixation ainsi que boîte de connexion équipée d'un tel dispositif

(30) Priorität: 17.03.1999 DE 19911941
(43) Veröffentlichungstag der Anmeldung: 20.09.2000
(73) Patentinhaber: Delphi Technologies, Inc., Troy, MI 48007 (US)
(72) Erfinder: Lübstorf, Mario, 42489 Wülfrath (DE); Schwarz, Lechoslaw, 42281 Wuppertal (DE); Herlitz, Martin, 42897 Remscheid (DE); Schweiger, Peter, 58323 Schwelm (DE); Schekalla, Peter, 42329 Wuppertal (DE); Hoschek, Wolfgang, 64546 Mörfelden-Walldorf (DE)
(74) Vertreter: Manitz, Finsterwald & Partner GbR

(56) Entgegenhaltungen:
- DE-A- 4 131 779
- DE-A- 19 724 935
- DE-C- 727 499
- US-A- 5 807 052

## Beschreibung

Die Erfindung betrifft eine Befestigungseinrichtung mit einem Bauteil zur Montage dieses Bauteils an einer Unterlage, insbesondere zur Montage eines Kupplungsgehäuses einer elektrischen Anschlußkupplung an einem Karosseriebauteil eines Kraftfahrzeuges, mit einem Befestigungselement zum vorzugsweise lösbaren Verbinden des Bauteils mit der Unterlage, und mit einem in einer am Bauteil vorgesehenen Aufnahme gehaltenen Positionierelement, in dem eine Durchgangsöffnung ausgebildet ist, durch die das Befestigungselement ragt, wobei das Positionierelement gemeinsam mit dem Befestigungselement relativ zum Bauteil in der Aufnahme bewegbar ist und wobei das Befestigungselement vor der Montage mit dem Positionierelement gekoppelt ist. Ferner betrifft die Erfindung ein Kupplungsgehäuse einer Anschlußkupplung zum Verbinden mindestens zweier elektrischer Leiter, mit einer derartigen Befestigungseinrichtung.

In DE-A-41 31 779 ist eine Schraubbefestigung für eine Abdeckung oder Frontplatte eines Geräts mit einer Halsschraube beschrieben. Zur Vergrößerung eines Radialspiels an einer Befestigungsstelle ist die Halsschraube der Schraubbefestigung axial durch eine Gewindelochscheibe hindurch geschraubt, welche radial schwimmend und unverlierbar in einer radialen Erweiterung einer fest mit der Abdeckung oder der Frontplatte verbundenen Buchse gelagert ist. Dadurch wird ein größerer Toleranzausgleich bei Lochbildern mit großen Lochabständen zu einem Bezugsloch (große Abdeckungen) bzw. eine wirtschaftlichere Herstellung solcher Lochbilder mit größeren Toleranzen ermöglicht.

In US-A-5 807 052 ist ein vormontiertes Werkstück, das auf einer Befestigungsfläche eines zweiten Werkstücks befestigbar ist, beschrieben. Das vormontierte Werkstück umfasst eine durch das Werkstück zwischen einer äußeren Fläche und einer Befestigungsfläche hindurchgehende Öffnung. Ein Hülsenelement ist verliersicher in der Öffnung durch das vormontierte Werkstück angeordnet. In dem Hülsenelement ist ein Befestigungselement mit einem Gewindeschaftabschnitt und einem Kopf verliersicher angeordnet. Das Befestigungselement ist axial und lateral relativ zu dem vormontierten Werkstück positionierbar, wobei das vormontierte Werkstück ohne Behinderung durch das Befestigungselement auf der Befestigungsfläche des zweiten Werkstücks befestigbar und ausrichtbar ist. Das Hülsenelement umfasst ein elastisches erstes, im Wesentlichen radiales Flanschelement, das nach Befestigung des vormontierten Bauteils eine Positionierung des Hülsenelements relativ zu dem vormontierten Werkstück in axialer Richtung erlaubt.

Es ist Aufgabe der Erfindung, eine Befestigungseinrichtung für ein Bauteil bzw. ein Kupplungsgehäuse mit einer Befestigungseinrichtung anzugeben, durch deren Verwendung die Montage des Bauteils bzw. des Kupplungsgehäuses an einer Unterlage vereinfacht ist.

Die Aufgabe wird bei einer Befestigungseinrichtung der eingangs genannten Art durch die kennzeichnenden Merkmale des Anspruchs 1 gelöst. Ferner wird die Aufgabe durch ein Kupplungsgehäuse mit den Merkmalen nach Anspruch 11 gelöst.

Bei der Erfindung ist das Befestigungselement vor der Montage am Bauteil bzw. am Kupplungsgehäuse vormontiert. Dadurch kann auf ein separates Bereitstellen des Bauteils bzw. des Kupplungsgehäuses am Montagearbeitsplatz verzichtet werden, wodurch ein aufwendiges Vorkommissionieren dieser Komponenten entfallen kann. Des weiteren ist die Montage an sich vereinfacht, da der Werker nur das bereits mit dem Befestigungselement vormontierte Bauteil bzw. Kupplungsgehäuse der Bereitstellungsstation entnehmen muß. Durch die relative Beweglichkeit des Befestigungselementes zum Bauteil bzw. zum Kupplungsgehäuse kann der Werker problemlos Toleranzen ausgleichen, wenn er das Befestigungselement mit der Unterlage verbinden möchte, obwohl das Befestigungselement mit dem Positionierelement gekoppelt ist.

Vorteilhafte Weiterbildungen der Erfindung ergeben sich aus der Beschreibung, den Zeichnungen sowie den Unteransprüchen.

So ist es besonders vorteilhaft, wenn das Positionierelement nach der Montage vom Befestigungselement entkoppelt ist. Dadurch wird erreicht, daß die zwischen dem Bauteil bzw. dem Kupplungsgehäuse und der Unterlage aufzubringenden Verbindungskräfte ausschließlich vom Befestigungselement an das Bauteil übertragen werden, wodurch ein Verrutschen des montierten Bauteils bzw. montierten Kupplungsgehäuses relativ zur Unterlage vermieden wird.

Als Befestigungselement eignet sich insbesondere eine Schraube, die vor der Montage mit einem vorzugsweise selbsthemmenden Innengewinde in Eingriff steht, das in einer am Positionierelement ausgebildeten Durchgangsbohrung vorgesehen ist. Dabei ist es besonders von Vorteil, wenn der Gewindegang des Innengewindes sich nur über etwa drei Viertel des Innenumfangs der Durchgangsbohrung erstreckt, so daß die Schraube, sobald sie mit einem an der Unterlage ausgebildeten Gegengewinde in Eingriff kommt, vom Positionierelement entkoppelt ist. Ist das in der Durchgangsbohrung des Positionierelementes ausgeformte Innengewinde als selbsthemmendes Innengewinde ausgebildet, kann ein unbeabsichtigtes Lösen der Schraube vor der Montage wirksam vermieden werden.

Bei einer bevorzugten Weiterbildung der Erfindung ist zusätzlich am Bauteil bzw. am Kupplungsgehäuse eine Zentrierhülse vorgesehen, die zur Aufnahme eines zweiten Befestigungselementes dient, mit dem das Bauteil bzw. das Kupplungsgehäuse zusätzlich mit der Unterlage verbunden werden kann. Durch die Kombination des beweglich am Bauteil bzw. am Kupplungsgehäuse vorgesehenen ersten Befestigungselementes und des zweiten Befestigungselementes kann der Abstand zwischen den beiden Befestigungselementen problemlos verändert werden, um Maßabweichungen auszugleichen, die zwischen den Befestigungsstellen an der Unterlage bestehen. Auch hier wird vorzugsweise die Verwendung einer Schraube als zweites Befestigungselement vorgeschlagen, die in ein vorzugsweise selbsthemmendes Innengewinde geschraubt wird, das in der Zentrierhülse ausgebildet ist.

Bei der Verwendung einer Schraube als Befestigungselement weist die Schraube vorzugsweise zwischen ihrem Schraubenkopf und ihrem Gewindeabschnitt einen gewindelosen Schaftabschnitt auf, dessen Außendurchmesser vorzugsweise geringer ist als der Kerndurchmesser des Gewindeabschnitts. Dadurch wird erreicht, daß die Schraube, sobald sie mit dem an der Unterlage ausgebildeten Gewinde in Eingriff kommt, mit ihrem Gewindeabschnitt nicht mehr mit dem am Positionierelement bzw. in der Zentrierhülse ausgebildeten Innengewinde verschraubt ist. Hat der gewindelose Schaftabschnitt einen geringeren Außendurchmesser als der Kerndurchmesser des Gewindeabschnittes, kann die Schraube im Positionierelement bzw. in der Zentrierhülse bewegt werden. Ferner ist es von Vorteil, wenn der Endabschnitt am Schaftende der Schraube, der in den Gewindeabschnitt übergeht, einen Außendurchmesser aufweist, der geringer ist als der Kerndurchmesser des Gewindeabschnittes. Durch den geringeren Außendurchmesser des Endabschnitts kann der Werker mit dem Schaftende der Schraube die Eintrittsöffnung des an der Unterlage ausgebildeten Gewindes ertasten, wodurch die Montage des Bauteils bzw. des Kupplungsgehäuses weiter erleichtert ist.

Nachfolgend wird die Erfindung anhand eines Ausführungsbeispiels unter Bezugnahme auf die Zeichnungen näher erläutert. Darin zeigen:
- Fig. 1: eine perspektivische Explosionsdarstellung eines Kupplungsgehäuses einer Anschlußkupplung mit einer erfindungsgemäßen Befestigungseinrichtung;
- Fig. 2: eine geschnittene Seitenansicht eines Positionierelementes der Befestigungseinrichtung nach Fig. 1;
- Fig. 3: eine Draufsicht auf das Positionierelement nach Fig. 2;
- Fig. 4: eine geschnittene Seitenansicht des Positionierelementes nach Fig. 2 mit eingeschraubter Befestigungsschraube;
- Fig. 5: eine teilweise geschnittene Seitenansicht des Kupplungsgehäuses nach Fig. 1 unmittelbar vor der Montage an einem Bodenblech eines Kraftfahrzeuges; und
- Fig. 6: eine teilweise geschnittene Seitenansicht des Kupplungsgehäuses nach Fig. 1 nach der Montage an dem Bodenblech.

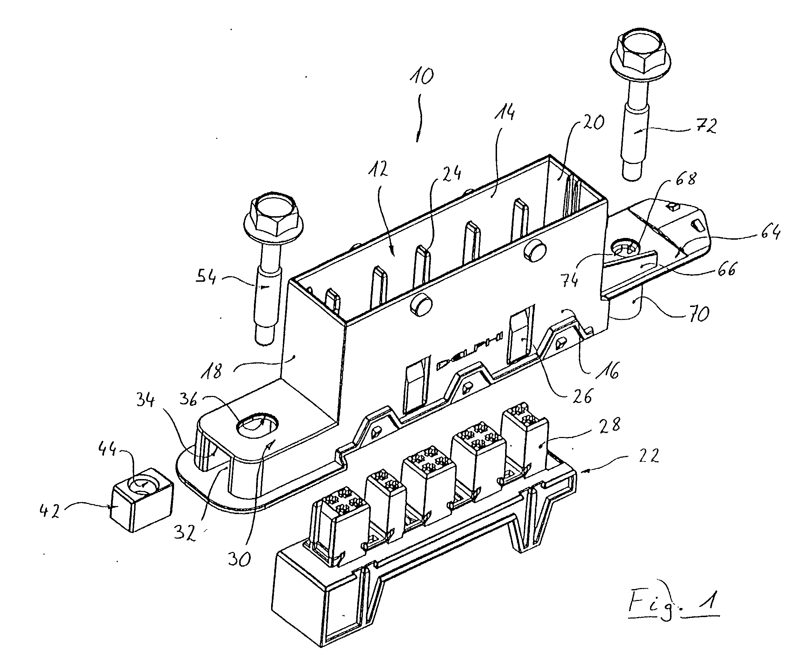

Fig. 1 zeigt eine perspektivische Explosionsdarstellung einer Anschlußkupplung 10 aus Kunststoff, die in einem Kraftfahrzeug als Anschlußstelle zwischen elektrischen Leitern (nicht dargestellt) verwendet wird. Die Anschlußkupplung 10 weist ein Kupplungsgehäuse 12 auf, das aus zwei Seitenwänden 14 und 16 sowie zwei Stirnseiten 18 und 20 gebildet ist. Die beiden Seitenwände 14 und 16 sowie die beiden Stirnseiten 18 und 20 des Kupplungsgehäuses 12 definieren ein rechteckiges Hohlprofil, dessen Ober- und Unterseite offen sind.

In das Kupplungsgehäuse 12 wird ein Kontakteinsatz 22 eingeschoben, der sich an an den Innenwänden ausgebildeten Stützkanten 24 abstützt und mit jeweils zwei an jeder Seitenwand 14 bzw. 16 ausgebildeten Rasthaken 26 verrastet, die den Kontakteinsatz 22 in einer vorgegebenen, definierten Position halten. Der Kontakteinsatz 22 hat mehrere Kontaktbuchsen 28, an die mehrere im Kupplungsgehäuse 12 endende elektrische Leiter (nicht dargestellt) angeschlossen sind. In die Oberseite des Kupplungsgehäuses 12 kann ein Kupplungsstecker (nicht dargestellt) eingesteckt werden, der gleichfalls mit einem Kontakteinsatz ausgestattet ist, welcher über eine der Anzahl der Kontaktbuchsen entsprechende Anzahl von Kontaktsteckern verfügt, an die die im Kupplungsstecker endenden elektrischen Leiter (nicht dargestellt) angeschlossen sind.

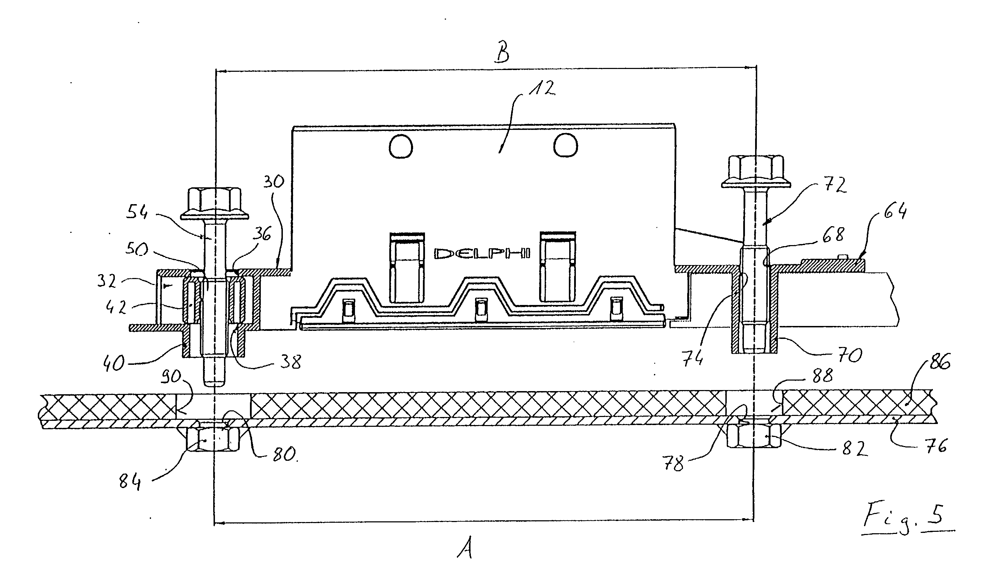

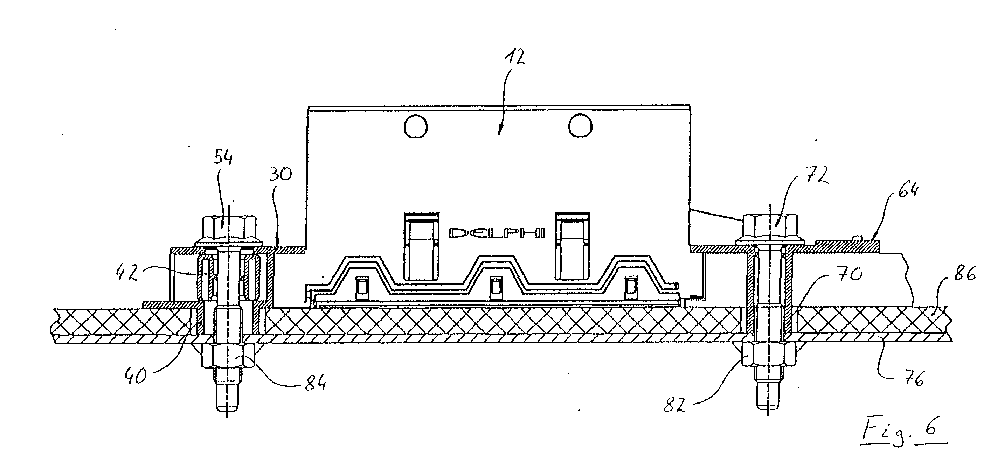

Das Kupplungsgehäuse 12 der Anschlußkupplung 10 besitzt ferner an seiner in Fig. 1 links dargestellten Stirnseite 18 einen rechtwinklig von dieser abstehenden Halteflansch 30, der mit seiner Unterseite im wesentlichen bündig mit der Unterseite des Kupplungsgehäuses 12 abschließt. Im Halteflansch 30 ist eine im Querschnitt etwa rechteckige Aufnahme 32 ausgebildet, die an der parallel zur Stirnseite 18 verlaufenden Stirnseite des Halteflansches 30 eine Aufnahmeöffnung 34 aufweist. In der Mitte der Ober- und Unterseite des Halteflansches 30 ist jeweils ein Langloch 36 bzw. 38 (vgl. Fig. 5 und 6) ausgebildet. Die Langlöcher 36 und 38 verlaufen in Längsrichtung des Kupplungsgehäuses 12 und fluchten miteinander. Wie die Fig. 5 und 6 weiter zeigen, steht von der Unterseite des Halteflansches 30 ferner eine im Querschnitt kreisförmige Abstandshülse 40 ab, die zu dem unteren Langloch 38 ausgerichtet ist und deren zylindrische Durchgangsbohrung mit dem Langloch 38 fluchtet, wobei der Durchmesser der Durchgangsbohrung in etwa dem maximalen Kantenabstand der das Langloch 38 begrenzenden Umlaufkante entspricht.

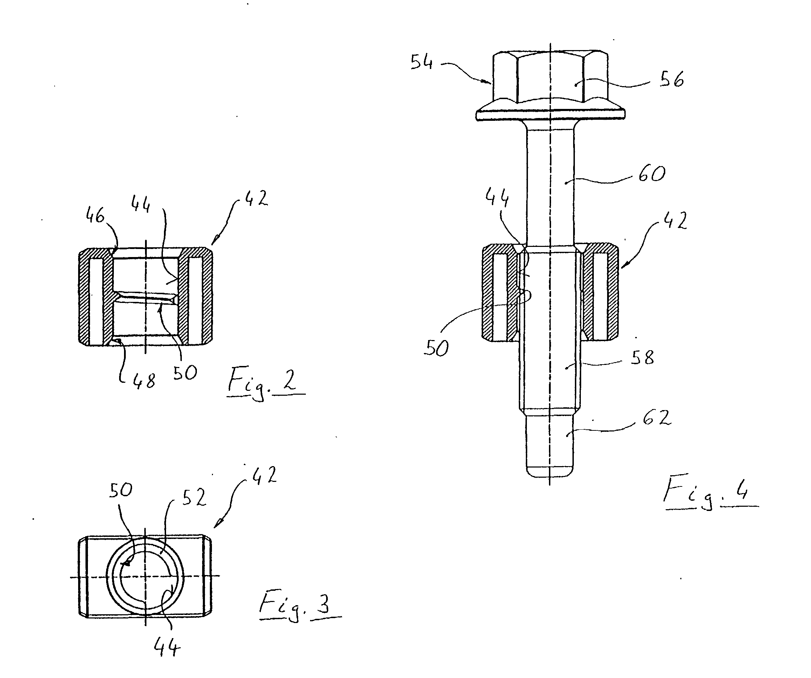

In die Aufnahme 32 wird vor der Montage durch die Aufnahmeöffnung 34 ein etwa quaderförmiges Positionierelement 42 eingeführt, das nachfolgend unter Bezugnahme auf die Fig. 2 bis 4 näher erläutert wird. Das Positionierelement 42 weist eine in Querrichtung verlaufende Durchgangsbohrung 44 auf, die symmetrisch bezüglich der Seitenflächen des Positionierelementes 42 ausgebildet ist. Die Durchgangsbohrung 44 ist an jeder ihrer beiden Öffnungen mit einer Fase 46 bzw. 48 versehen. Symmetrisch zwischen den Fasen 46 und 48 ist am Innenumfang der Durchgangsbohrung 44 ein selbsthemmendes Gewinde 50 ausgebildet, dessen Gewindegang 52 sich über etwa drei Viertel des Innenumfangs der Durchgangsbohrung 44 erstreckt, wie Fig. 3 zeigt. Das Positionierelement 42 wird so in die Aufnahme 32 eingeführt, daß die Durchgangsbohrung 44 mit den beiden Langlöchern 36 und 38 fluchtet. Anschließend wird durch das an der Oberseite des Halteflansches 30 ausgebildete Langloch 36 eine erste Befestigungsschraube 54 eingeführt und in das Innengewinde 50 des Positionierelementes 42 soweit eingeschraubt, bis die erste Befestigungsschraube 54 aus der von der Unterseite des Halteflansches 30 abstehenden Abstandshülse 40 ragt.

Wie Fig. 4 zeigt, weist die erste Befestigungsschraube 54 zwischen ihrem Schraubenkopf 56 und ihrem Gewindeabschnitt 58 einen gewindelosen Schaftabschnitt 60 auf, dessen Außendurchmesser geringer ist als der Kerndurchmesser des Gewindeabschnitts 58. An den Gewindeabschnitt 58 schließt sich ein Endabschnitt 62 an, der das Schaftende der ersten Befestigungsschraube 54 bildet und dessen Außendurchmesser gleichfalls geringer ist als der Kerndurchmesser des Gewindeabschnitts 58.

Von der in Fig. 1 rechts dargestellten Stirnseite 20 des Kupplungsgehäuses 12 steht rechtwinklig ein Befestigungsflansch 64 ab, der zur Unterseite des Kupplungsgehäuses 12 beabstandet ist. Der Befestigungsflansch 64 verläuft so zur unteren Kante der Stirnseite 24, daß unter dem Befestigungsflansch 64 eine rechteckige Aussparung gebildet ist, die seitlich durch die Längskanten der Seitenwände 14 und 16 begrenzt ist und durch die die elektrischen Leiter des im Kupplungsgehäuse 12 gehaltenen Kontakteinsatzes 22 geführt werden können. An der Oberseite des Befestigungsflansches 64 sind zwei mit Abstand zueinander angeordnete Versteifungen 66 ausgebildet, von denen in den Fig. 1, 5 und 6 nur die in Fig. 1 rechts dargestellte Versteifung 66 zu sehen ist.

Etwa in der Mitte des Befestigungsflansches 64 zwischen den beiden Versteifungen 66 ist eine Durchgangsöffnung 68 ausgebildet, die mit einer an der Unterseite des Befestigungsflansches 64 senkrecht nach unten abstehenden, als Hohlzylinder ausgebildeten Zentrierhülse 70 fluchtet. In die Durchgangsöffnung 68 kann eine zweite Befestigungsschraube 72, die zur ersten Befestigungsschraube 54 identisch ist, in die Zentrierhülse 70 eingeführt werden. Nahe der Durchgangsöffnung 68 ist an der Innenwand der Zentrierhülse 70 ein selbsthemmendes zweites Innengewinde 74 ausgebildet, dessen Gewindegang sich gleichfalls nur über etwa drei Viertel des Innenumfangs der in der Zentrierhülse 70 ausgebildeten Durchgangsbohrung erstreckt.

Zur Vorbereitung der Montage wird zunächst das Positionierelement 42 in die Aufnahme 32 eingeführt und anschließend die erste Befestigungsschraube 54 in das Positionierelement 42 soweit eingeschraubt, daß sie mit ihrem Schaftende aus der an der Unterseite des Halteflansches 30 angeformten Abstandshülse 40 ragt, wie Fig. 5 zeigt. Die Höhe der Abstandshülse 40 ausgehend von der Unterseite des Kupplungsgehäuses 12 entspricht in etwa dem Abstand, den die Zentrierhülse 70 über die Unterseite des Kupplungsgehäuses 12 hervorsteht, so daß die Stirnseite der Abstandshülse 40 und die Stirnseite der Zentrierhülse 70 in einer gemeinsamen Ebene angeordnet sind.

Die zweite Befestigungsschraube 72 wird soweit in das Innengewinde 74 der Zentrierhülse 70 eingeschraubt, daß die zweite Befestigungsschraube 72 mit ihrer Stirnseite bündig mit der Stirnseite der Zentrierhülse 70 abschließt. In diesem vormontierten Zustand wird das Kupplungsgehäuse 12 an einem Bodenblech 76 des Kraftfahrzeuges befestigt, wie nachfolgend unter Bezugnahme auf die Fig. 5 und 6 erläutert wird.

Zu diesem Zweck sind im Bodenblech 76 zwei Durchgangsbohrungen 78 und 80 ausgebildet. Jeder Durchgangsbohrung 78 und 80 ist jeweils eine Mutter 82 bzw. 84 zugeordnet, die mit der dem Kupplungsgehäuse 12 abgewandten Unterseite des Bodenbleches 76 verschweißt ist, wobei das Gewinde der Mutter 82 bzw. 84 mit der jeweiligen Durchgangsbohrung 78 bzw. 80 fluchtet. Der Abstand A zwischen den beiden Durchgangsbohrungen 78 und 80 soll in etwa dem Abstand B zwischen den Längsachsen der beiden Befestigungsschrauben 54 und 72 entsprechen, wenn die erste Befestigungsschraube 54 konzentrisch zur Abstandshülse 40 angeordnet ist. Auf der Oberseite des Bodenbleches 76 liegt eine Materiallage auf, beispielsweise ein Bodenbelag, in der zwei Öffnungen 88 und 90 ausgebildet sind, die zu den Durchgangsbohrungen 78 und 80 konzentrisch angeordnet sein sollten. Der Abstand zwischen den Öffnungen 88 und 90 entspricht in etwa dem Abstand zwischen der Symmetrieachse der Abstandshülse 40 und der Symmetrieachse der Zentrierhülse 70.

Zur Montage wird das Kupplungsgehäuse 12, nachdem der Kontakteinsatz 22 eingesetzt und die beiden Befestigungsschrauben 54 und 72 vormontiert worden sind, auf die Materiallage 76 aufgesetzt, wobei die Zentrierhülse 70 in die Öffnung 88 und die Abstandshülse 40 in die Öffnung 90 eingeführt wird. Sobald die Zentrierhülse 70 mit ihrer Stirnseite auf dem Bodenblech 76 aufsetzt, wird die zweite Befestigungsschraube 72 leicht angezogen, wobei sie mit ihrer Stirnseite in die Durchgangsbohrung 78 einfädelt und schließlich mit der dieser zugeordneten Mutter 82 in Eingriff kommt. Anschließend wird die erste Befestigungsschraube 54 in die Durchgangsbohrung 80 eingefädelt und, sobald die erste Befestigungsschraube 54 in die Durchgangsbohrung 80 ragt, mit der dieser zugeordneten Mutter 84 verschraubt.

Da aufgrund von Fertigungstoleranzen der Abstand A zwischen den Durchgangsbohrungen 78 und 80 um mehrere Zehntel Millimeter zu dem Abstand B zwischen den Befestigungsschrauben 54 und 70 variieren kann, wäre eine Montage des Kupplungsgehäuses 12 bei starrem Abstand B zwischen den Befestigungsschrauben 54 und 72 deutlich erschwert oder gegebenenfalls sogar unmöglich. Aus diesem Grund ermöglicht das verschieblich in der Aufnahme 32 gehaltene Positionierelement 42 eine Bewegung der ersten Befestigungsschraube 54 relativ zur zweiten Befestigungsschraube 72, um Maßabweichungen zwischen den Durchgangsbohrungen 78 und 80 ausgleichen zu können. Um ein Lösen der Befestigungsschrauben 54 und 72 während der Montage des Kupplungsgehäuses 12 zu verhindern, sind die beiden Innengewinde 50 und 74 als selbsthemmende Gewinde ausgebildet, die ein Verdrehen oder Sichlösen der beiden Befestigungsschrauben 54 und 72 verhindern.

Sobald die beiden Befestigungsschrauben 54 und 72 mit den Muttern 82 und 84 in Eingriff stehen, werden sie beispielsweise mit Hilfe eines Maulschlüssels soweit angezogen, bis das Kupplungsgehäuse 12 mit der Stirnseite seiner Zentrierhülse 70 und mit der Stirnseite seiner Abstandshülse 40 unter Vorspannung am Bodenblech 76 anliegt, wie Fig. 6 zeigt. In diesem Montagezustand sind die beiden Befestigungsschrauben 54 und 72 außer Eingriff mit den beiden Innengewinden 50 und 74, wodurch ein unbeabsichtigtes Verspannen zwischen dem jeweiligen Innengewinde 50 bzw. 74 durch die mit der Mutter 82 bzw. 84 in Eingriff stehende Befestigungsschraube 54 bzw. 72 verhindert wird. Gleichzeitig ermöglicht der gewindelose Schaftabschnitt 60 jeder Befestigungsschraube 54 bzw. 72 ein Lösen derselben vom Innengewinde 50 bzw. 74. Um ein Klappern des relativ zur ersten Befestigungsschraube 54 beweglichen Positionierelementes 42 zu verhindern, wird das Positionierelement 42 durch die Kraft der Befestigungsschraube 54 in der Aufnahme 32 verspannt.

Anstelle der Befestigungsschrauben 54 und 72, die mit den Muttern 82 und 84 in Eingriff stehen, können bei einer abgewandelten Ausführungsform als Befestigungselemente auch Nieten verwendet werden, die an der Unterseite des Bodenbleches 76 vernietet werden. Der Niet wird beispielsweise durch einen an der Innenwand der Durchgangsbohrung eines entsprechend abgewandelten Positionierelementes ausgebildeten umlaufende Wulst im Positionierelement gehalten. Der Niet kann gleichfalls an seinem Schaft, ähnlich den Befestigungsschrauben 54 und 72, Abschnitte mit unterschiedlichen Durchmessern aufweisen. Ferner ist es denkbar, das Positionierelement 42 als U-förmiges Bauteil auszubilden, wobei die Schenkel und die Basisplatte des U-förmigen Positionierelementes die Durchgangsöffnung definieren, durch die die Befestigungsschraube bzw. der Niet geführt ist.

### Bezugszeichenliste

- 10: Anschlußkupplung
- 12: Kupplungsgehäuse
- 14: Seitenwand
- 16: Seitenwand
- 18: Stirnseite
- 20: Stirnseite
- 22: Kontakteinsatz
- 24: Stützkanten
- 26: Rasthaken
- 28: Kontaktbuchsen
- 30: Halteflansch
- 32: Aufnahme
- 34: Aufnahmeöffnung
- 36: Langloch
- 38: Langloch
- 40: Abstandshülse
- 42: Positionierelement
- 44: Durchgangsbohrung
- 46: Fase
- 48: Fase
- 50: Innengewinde
- 52: Gewindegang
- 54: erste Befestigungsschraube
- 56: Schraubenkopf
- 58: Gewindeabschnitt
- 60: gewindeloser Schaftabschnitt
- 62: Endabschnitt
- 64: Befestigungsflansch
- 66: Versteifungen
- 68: Durchgangsöffnung
- 70: Zentrierhülse
- 72: zweite Befestigungsschraube
- 74: zweites Innengewinde
- 76: Bodenblech
- 78: Durchgangsbohrung
- 80: Durchgangsbohrung
- 82: Mutter
- 84: Mutter
- A: Abstand zwischen den Durchgangsbohrungen 78 und 80
- B: Abstand zwischen den Befestigungsschrauben 54 und 72
- 86: Materiallage
- 88: Öffnung
- 90: Öffnung

## Patentansprüche

1. Befestigungseinrichtung mit einem Bauteil zur Montage dieses Bauteils an einer Unterlage (76), insbesondere zur Montage eines Kupplungsgehäuses einer elektrischen Anschlußkupplung an einem Karosseriebauteil eines Kraftfahrzeuges, mit einem Befestigungselement (54) zum vorzugsweise lösbaren Verbinden des Bauteils (12) mit der Unterlage (76), und mit einem in einer am Bauteil (12) vorgesehenen Aufnahme (32) gehaltenen Positionierelement (42), in dem eine Durchgangsöffnung (44) ausgebildet ist, durch die das Befestigungselement (54) ragt, wobei das Positionierelement (42) gemeinsam mit dem Befestigungselement (54) relativ zum Bauteil (12) in der Aufnahme (32) bewegbar ist, und
wobei das Befestigungselement (54) vor der Montage mit dem Positionierelement (42) gekoppelt ist
**dadurch gekennzeichnet,**
**daß** das Befestigungselement eine Befestigungsschraube (54) oder ein Niet ist, und
**daß** das Positionierelement in die Aufnahme (32) durch eine Aufnahmeöffnung (34) der Aufnahme (30) in einer Richtung einschiebbar ist, die quer zur Längsrichtung des Befestigungselements (54), wenn dieses im Positionierelement gehalten ist, verläuft.

2. Befestigungseinrichtung nach Anspruch 1,
**dadurch gekennzeichnet,**
**daß** das Positionierelement (42) nach der Montage vom Befestigungselement (54) entkoppelt ist.

3. Befestigungseinrichtung nach Anspruch 1,
**dadurch gekennzeichnet,**
**daß** das Positionierelement (42) eine Durchgangsbohrung (44) mit einem vorzugsweise selbsthemmenden Innengewinde (50) aufweist, und daß das Befestigungselement eine Schraube (54) ist.

4. Befestigungseinrichtung nach Anspruch 3,
**dadurch gekennzeichnet,**
**daß** sich der Gewindegang (52) des im Positionierelement (42) ausgebildeten Innengewindes (50) über etwa ¾ des Innenumfangs der Durchgangsbohrung (44) des Positionierelementes (42) erstreckt.

5. Befestigungseinrichtung nach Anspruch 1,
**dadurch gekennzeichnet,**
**daß** am Bauteil (12) eine Zentrierhülse (70) vorgesehen ist, die zur Aufnahme eines zweiten Befestigungselementes (72) zum vorzugsweise lösbaren Verbinden des Bauteils (12) mit der Unterlage (76) dient.

6. Befestigungseinrichtung nach Anspruch 5,
**dadurch gekennzeichnet,**
**daß** das zweite Befestigungselement (72) vor der Montage in der Zentrierhülse (70) gehalten ist.

7. Befestigungseinrichtung nach Anspruch 1,
**dadurch gekennzeichnet,**
**daß** am Bauteil (12) eine Zentrierhülse (70) vorgesehen ist, die zur Aufnahme einer Schraube (72) als zweites Befestigungselement zum lösbaren Verbinden des Bauteils (12) mit der Unterlage (76) dient, wobei die Zentrierhülse (70) eine Durchgangsbohrung mit einem vorzugsweise selbsthemmenden Innengewinde (74) aufweist, mit dem die Schraube (72) zumindest vor der Montage in Eingriff steht.

8. Befestigungseinrichtung nach Anspruch 7,
**dadurch gekennzeichnet,**
**daß** sich der Gewindegang des in der Zentrierhülse (70) ausgebildeten Innengewindes (74) über etwa ¾ des Innenumfangs der Durchgangsbohrung der Zentrierhülse (70) erstreckt.

9. Befestigungseinrichtung nach Anspruch 1,
**dadurch gekennzeichnet,**
**daß** das Befestigungselement eine Schraube (54, 72) ist, die zwischen ihrem Schraubenkopf (56) und ihrem Gewindeabschnitt (58) einen gewindelosen Schaftabschnitt (60) aufweist, dessen Außendurchmesser vorzugsweise geringer ist als der Kerndurchmesser des Gewindeabschnittes (58).

10. Befestigungseinrichtung nach Anspruch 1,
**dadurch gekennzeichnet,**
**daß** das Befestigungselement eine Schraube (54, 72) ist, die an ihrem Schaftende einen in einen Gewindeabschnitt (58) übergehenden Endabschnitt (62) aufweist, dessen Außendurchmesser vorzugsweise geringer ist als der Kerndurchmesser des Gewindeabschnittes (58).

11. Kupplungsgehäuse einer Anschlußkupplung zum Verbinden mindestens zweier elektrischer Leiter, mit einer Befestigungseinrichtung nach einem der vorhergehenden Ansprüche zum vorzugsweise lösbaren Verbinden des Kupplungsgehäuses (12) mit der Unterlage (76).

12. Kupplungsgehäuse nach Anspruch 11,
**dadurch gekennzeichnet,**
**daß** vom Kupplungsgehäuse (12) ein Halteflansch (30) für das Befestigungselement (54) absteht, in dem die Aufnahme (32) zum Halten des Positionierelementes (42) ausgebildet ist, wobei das in der Aufnahme (32) verschiebliche Positionierelement (42) mit seiner Durchgangsöffnung (44) zu zwei am Halteflansch (30) ausgebildeten Öffnungen (36, 38) ausrichtbar ist, durch die das Befestigungselement (54) vor der Montage ragt.

## Claims

1. Securing device having a component for the mounting of said component at a support (76), in particular for the mounting of a coupling housing of an electrical connection coupling to a body component of a motor vehicle, comprising a securing element (54) for the preferably releasable connection of the component (12) to the support (76), and a positioning element (42) which is held in a reception (32) provided at the component (12) and in which a passage opening (44) is formed through which the securing element (54) protrudes, with the positioning element (42) being movable together with the securing element (54) relative to the component (12) in the reception (32), and with the securing element (54) being coupled to the positioning element (42) prior to the mounting,
**characterized**
**in that** the securing element is a securing screw (54) or a rivet; and
**in that** the positioning element can be pushed into the reception (32) through a reception opening (34) of the reception (30) in a direction which extends transversely to the longitudinal direction of the securing element (54) when this is held in the positioning element.

2. Securing device in accordance with claim 1,
**characterized in that**
the positioning element (42) is uncoupled from the securing element (54) after the mounting.

3. Securing device in accordance with claim 1,
**characterized in that**
the positioning element (42) has a passage bore (44) with a preferably self-locking inner thread (50); and **in that** the securing element is a screw (54).

4. Securing device in accordance with claim 3,
**characterized in that**
the thread path (52) of the inner thread (50) formed in the positioning element (42) extends over approximately ¾ of the inner periphery of the passage bore (44) of the positioning element (42).

5. Securing device in accordance with claim 1,
**characterized in that**
a centering sleeve (70) is provided at the component (12) which serves for the reception of a second securing element (72) for the preferably releasable connecting of the component (12) to the support (76).

6. Securing device in accordance with claim 5,
**characterized in that**
the second securing element (72) is held in the centering sleeve (70) prior to the mounting.

7. Securing device in accordance with claim 1,
**characterized in that**
a centering sleeve (70) is provided at the component (12) which serves for the reception of a screw (72) as a second securing element for the releasable connecting of the component (12) to the support (76), with the centering sleeve (70) having a passage bore with a preferably self-locking inner thread (74) with which the screw (72) is in engagement at least prior to the mounting.

8. Securing device in accordance with claim 7,
**characterized in that**
the thread path of the inner thread (74) formed in the centering sleeve (70) extends over approximately ¾ of the inner periphery of the passage bore of the centering sleeve (70).

9. Securing device in accordance with claim 1,
**characterized in that**
the securing element is a screw (54, 72) which has between its screw head (56) and its thread section (58) a threadless shaft section (60), the outer diameter of which is preferably less than the core diameter of the thread section (58).

10. Securing device in accordance with claim 1,
**characterized in that**
the securing element is a screw (54, 72) which has at its shaft end an end section (62) which merges into a thread section (58) and the outer diameter of which is preferably less than the core diameter of the thread section (58).

11. Coupling housing of a connector coupling for the connecting of at least two electrical conductors, comprising a securing device in accordance with any one of the preceding claims for the preferably releasable connecting of the coupling housing (12) to the support (76).

12. Coupling housing in accordance with claim 11,
**characterized in that**
a holder flange (30) for the securing element (54) in which the reception (32) for the holding of the positioning element (42) is formed projects from the coupling housing (12), with the positioning element (42), which is displaceable in the reception (32), being alignable with its passage opening (44) to two openings (36, 38) which are formed at the holder flange (30) and through which the securing element (54) protrudes prior to the mounting.

## Revendications

1. Dispositif de fixation ayant une pièce pour le montage de cette pièce à un support (76), en particulier pour le montage d'un boîtier de raccordement d'un organe de raccordement électrique à un élément de carrosserie d'un véhicule automobile, avec un élément (54) de fixation pour une fixation de préférence démontable de la pièce (12) au support (76), et avec un élément (42) de positionnement maintenu dans un logement (32) prévu dans la pièce (12), dans lequel une ouverture traversante (44) est formée à travers laquelle dépasse l'élément (54) de fixation, dans lequel l'élément (42) de positionnement peut se déplacer en même temps que l'élément (54) de fixation par rapport à la pièce (12) dans le logement (32), et
dans lequel l'élément (54) de fixation est relié avant le montage à l'élément (42) de positionnement,
**caractérisé en ce que** l'élément de fixation est une vis de fixation (54) ou un rivet, et que
l'élément de positionnement peut être glissé dans le logement (32) à travers une ouverture (34) de logement du logement (32) dans une direction qui s'étend perpendiculairement à la direction longitudinale de l'élément (54) de fixation lorsque cet élément est maintenu dans l'élément de positionnement.

2. Dispositif de fixation selon la revendication 1,
**caractérisé en ce que** l'élément (42) de positionnement, après le montage, est séparé de l'élément (54) de fixation.

3. Dispositif de fixation selon la revendication 1,
**caractérisé en ce que** l'élément (42) de positionnement présente un alésage traversant (44) avec un filetage intérieur (50) de préférence autobloquant, et que l'élément de fixation est une vis (54).

4. Dispositif de fixation selon la revendication 3,
**caractérisé en ce que** le pas (52) de filetage du filetage intérieur (50) formé dans l'élément (42) de positionnement s'étend sur environ ¾ de la circonférence intérieure de l'alésage traversant (44) de l'élément (42) de positionnement.

5. Dispositif de fixation selon la revendication 1,
**caractérisé en ce que** dans la pièce (12) un manchon (70) de centrage est prévu qui sert à recevoir un deuxième élément (72) de fixation pour une liaison de préférence démontable de la pièce (12) avec le support (76).

6. Dispositif de fixation selon la revendication 5,
**caractérisé en ce que** le deuxième élément (72) de fixation est maintenu dans le manchon (70) de centrage avant le montage.

7. Dispositif de fixation selon la revendication 1,
**caractérisé en ce que** dans la pièce (12) un manchon (70) de centrage est prévu qui sert à recevoir une vis (72) comme deuxième élément de fixation pour une liaison démontable de la pièce (12) avec le support (76), dans lequel le manchon (70) de centrage présente un alésage traversant avec un filetage intérieur (74) de préférence autobloquant avec lequel la vis (72) reste en prise au moins avant le montage.

8. Dispositif de fixation selon la revendication 7
**caractérisé en ce que** le pas de filetage du filetage intérieur formé dans le manchon (70) de centrage s'étend sur environ ¾ de la circonférence intérieure du trou traversant du manchon (70) de centrage.

9. Dispositif de fixation selon la revendication 1,
**caractérisé en ce que** l'élément de fixation est une vis (54, 72) qui entre sa tête (56) de vis et sa portion filetée (58) présente une portion (60) de tige non filetée dont le diamètre extérieur est de préférence inférieur au diamètre intérieur de la portion filetée (58).

10. Dispositif de fixation selon la revendication 1,
**caractérisé en ce que** l'élément de fixation est une vis (54, 72) qui à son extrémité de tige présente une portion d'extrémité (68) faisant suite à une portion filetée (58) dont le diamètre extérieur est de préférence inférieur au diamètre intérieur de la portion filetée (58).

11. Boîtier de raccordement d'un organe de raccordement pour le raccordement d'au moins deux conducteurs électriques avec un dispositif de fixation selon l'une des revendications précédentes, pour un raccordement de préférence démontable du boîtier (12) de raccordement avec le support (76).

12. Boîtier de raccordement selon la revendication 11,
**caractérisé en ce qu'**une bride (30) de maintien pour l'élément (54) de fixation s'avance depuis le boîtier (12) de raccordement, dans laquelle est formé l'évidement (32) pour maintenir l'élément (42) de positionnement, dans lequel l'élément (42) de positionnement pouvant coulisser dans l'évidement (32) avec son ouverture (44) traversante peut être orienté vers deux ouvertures (36, 38) formées dans la bride (30) de maintien à travers lesquelles l'élément (54) de fixation dépasse avant le montage.
